# EUROPEAN PATENT SPECIFICATION

(11) **EP 4 498 186 B1**
(45) Date of publication and mention of the grant of the patent: **09.12.2026**
(21) Application number: 24186638.3
(22) Date of filing: 04.07.2024
(51) Int. Cl.: G05B 15/02, H04L 12/12

(54) **BUILDING CONTROL DEVICE WITH PEER-TO-PEER COMMUNICATION FOR ENHANCED FUNCTIONALITY**
GEBÄUDESTEUERUNGSVORRICHTUNG MIT PEER-TO-PEER-KOMMUNIKATION FÜR ERWEITERTE FUNKTIONALITÄT
DISPOSITIF DE COMMANDE DE BÂTIMENT AVEC COMMUNICATION POSTE À POSTE POUR UNE FONCTIONNALITÉ AMÉLIORÉE

(30) Priority: 24.07.2023 US 202318357868
(43) Date of publication of application: 29.01.2025
(73) Proprietor: Honeywell International Inc., Charlotte, NC 28202 (US)
(72) Inventor: JOSEPH, Jeslin Paul, Charlotte, 28202 (US); DHAYALAN, Sivasanthanam, Charlotte, 28202 (US); KANNAIYAN, Karthikeyan, Charlotte, 28202 (US); JAIN, Abhisekh, Charlotte, 28202 (US); JOSEPH, Kingslin, Charlotte, 28202 (US); MADHUSUTHANAN, Sunil, Charlotte, 28202 (US); RAJAMANICKAM, Dinesh Babu, Charlotte, 28202 (US); HUBERT, Benitta, Charlotte, 28202 (US)
(74) Representative: Haseltine Lake Kempner LLP

(56) References cited:
- WO-A1-2019/099111
- US-A1- 2011 013 018
- US-A1- 2020 358 908
- US-A1- 2022 197 235

## Description

### TECHNICAL FIELD

The present disclosure relates generally to building control devices such as security devices, lighting devices, Heating, Ventilation and/or Air Condition (HVAC) device, and more particular building control devices with peer-to-peer communication for enhanced functionality.

### BACKGROUND

Building control systems include a number of building control devices. A building control device may include a number of different services running on the building control device. Some of the services may be running properly while other services may not be. For example, some of the services may become hung, meaning that the service is currently down and/or otherwise non-responsive. When one or more services on a building control device become hung, the performance of the building control device, and hence the performance of the building control system, may suffer. What would be desirable are improved methods for monitoring the health of each of the services running on a building control device.

US2022197235A1 discloses a system including one or more memory devices having instructions stored thereon that, when executed by one or more processors, cause the one or more processors to perform operations. The operations include: obtaining first data indicating operating parameters of a server of a building management system (BMS), obtaining second data regarding indicating operating parameters of at least one of a supervisory controller or a field controller of the BMS, obtaining third data regarding indicating operating parameters of one or more edge building devices, and calculating a performance index value for the BMS based on an aggregate of the first data, the second data, and the third data.

### SUMMARY

The present invention is defined by the independent claims, to which reference should now be made. Advantageous embodiments are set out in the dependent claims.

The present disclosure relates generally to building control devices such as security devices, lighting devices, Heating, Ventilation and/or Air Condition (HVAC) device, and more particular building control devices with peer-to-peer communication for enhanced functionality. For example, building control devices may include peer-to-peer communication for enhanced health monitoring of the building control devices by monitoring a health status of services running on a building control device. In another example, building control devices may use peer-to-peer communication to reduce power consumption of certain building control devices by maintaining some building control devices in a reduced power state and when a particular building control device detects an alarm and/or event, one or more of the neighboring building control devices may be woken up to help validate the detected alarm and/or event. In yet another example, building control devices may use peer-to-peer communication to improve a confidence score of an alarm and/or event detected by a building control device by having neighboring building control devices confirm the alarm and/or event (or not).

An example may be found in a method for monitoring a health status of each of a plurality of services running on a building control device of a building control system, wherein the health status of each of the plurality of services is selected from two or more predetermined health status conditions including a normal health status and a hung health status, wherein the hung health status indicates that the corresponding service is currently down and/or otherwise non-responsive. The example method includes the building control device determining the health status of each of the plurality of services running on the building control device. The building control device wirelessly transmits the health status of at least those services running on the building control device that are determined to have the hung health status, if any. In some cases, the health status may be wirelessly transmitted via a peer-to-peer communication path to one or more neighboring building control device, which can help determine whether one or more of the services running on the building control device are in fact in the hung state.

Another example may be found in a method for monitoring services running on a building control device of a building control system. The method includes repeatedly and proactively monitoring a plurality of services running on the building control device to identify when one or more of the plurality of services are currently down and/or otherwise non-responsive. In response to identifying that one or more of the plurality of services of the building control device is currently down and/or otherwise non-responsive, a failure is reported via a network to a central building controller of the building control system.

Another example may be found in a building control system that includes a plurality of building control devices and a central building controller, wherein the plurality of building control devices are operatively coupled to the central building controller via one or more networks. A first one of the plurality of building control devices establishes a wireless peer-to-peer communication path with a second neighboring one of the plurality of building control devices, wherein the wireless peer-to-peer communication path is separate from the one or more networks. The first one of the plurality of building control devices and/or the second one of the plurality of building control devices repeatedly and proactively monitor a plurality of services running on the first building control device to identify when one or more of the plurality of services running on the first building control device are currently down and/or otherwise non-responsive. In response to identifying that one or more of the plurality of services of the first one of the plurality of building control devices is are currently down and/or otherwise non-responsive, the second one of the plurality of building control devices report a failure via the one or more networks to the central building controller.

Another example may be found in a method for monitoring device health of a building control device. The method includes establishing a peer-to-peer communication path between the building control device and a neighboring building control device and establishing a time window to send via the peer-to-peer communication path one or more device health parameters from the building control device to the neighboring building control device, the one or more device health parameters providing an indication of the device health of the building control device. When the neighboring building control device does not receive the one or more device health parameters from the building control device during the time window, the neighboring building control device sends an alert to a building control system.

Another example may be found in a method for monitoring a health status of each of a plurality of services running on a building control device of a building control system, wherein the health status of each of the plurality of services is selected from two or more predetermined health status conditions including a normal health status and a hung health status, wherein the hung health status indicates that the corresponding service is currently down and/or otherwise non-responsive. The method includes establishing a peer-to-peer communication path between the building control device and a neighboring building control device of the building control system. The building control device determines the health status of each of the plurality of services running on the building control device. The method includes sending via the peer-to-peer communication path to the neighboring building control device the health status of each of the plurality of services of the building control device. The neighboring building control device reports an alert to a building control system when the health status of one or more of the plurality of services of the building control device are in the hung health status.

Another example may be found in a security system that includes a plurality of video cameras each operatively coupled with a central controller via one or more networks. A first one of the plurality of video cameras include an I/O port for communicating a video stream captured by the corresponding video camera to the central controller via the one or more networks, a wireless peer-to-peer communication port for establishing a wireless peer-to-peer communication with one or more neighboring ones of the plurality of video cameras, and a camera controller operatively coupled to the I/O port and the wireless peer-to-peer communication port. The camera controller includes a lower function mode, wherein in the lower function mode, the corresponding video camera produces a lower quality video stream that causes the corresponding video camera to consume less power and/or causes the corresponding video camera to consume less bandwidth when communicating the lower quality video stream to the central controller via the one or more networks. The camera controller also includes a higher function mode, wherein in the higher function mode, the corresponding video camera produces a higher quality video stream that causes the corresponding video camera to consume more power and/or causes the corresponding video camera to consume more bandwidth when communicating the higher quality video stream to the central controller via the one or more networks. The camera controller is configured to detect an occurrence of a security event adjacent the first one of the plurality of video cameras when the first one of the plurality of video cameras is in the lower function mode, and in response, the controller is configured to switch to the higher function mode and to send a message to one or more neighboring ones of the plurality of video cameras via the wireless peer-to-peer communication port to switch the one or more neighboring ones of the plurality of video cameras from their lower function mode to their higher function mode.

Another example may be found in a method for operating a security camera that includes an I/O port for communicating a video stream captured by the corresponding video camera to a central controller via one or more networks, and a wireless peer-to-peer communication port for establishing a wireless peer-to-peer communication with one or more neighboring security cameras. The method includes placing the camera controller into a lower function mode, wherein in the lower function mode, the security camera produces a lower quality video stream that causes the security camera to consume less power and/or causes the security camera to consume less bandwidth when communicating the lower quality video stream to the central controller via the one or more networks. An occurrence of a security event is detected adjacent the security camera when the security cameras is in the lower function mode. In response, the security camera is switched to a higher function mode, wherein in the higher function mode, the security camera produces a higher quality video stream that causes the security camera to consume more power and/or causes the security camera to consume more bandwidth when communicating the higher quality video stream to the central controller via the one or more networks, and a message is sent to one or more of neighboring security cameras via the wireless peer-to-peer communication port to switch the one or more neighboring security cameras from their lower function mode to their higher function mode.

Another example may be found in a method for operating a security system that includes a plurality of sensors each for detecting a corresponding security event. The method includes detecting a security event via a first one of the plurality of sensors and sending a message from the first one of the plurality of sensors to a first neighboring one of the plurality of sensors via a wireless peer-to-peer communication path indicating the detection of the security event by the first one of the plurality of sensors. The first neighboring one of the plurality of sensors receives the message and determines whether the first neighboring one of the plurality of sensors also detected the security event. The first neighboring one of the plurality of sensors reports the security event to a central security controller with a lower confidence score when the first neighboring one of the plurality of sensors did not detected the security event and reports the security event to the central security controller with a higher confidence score than the lower confidence score when the first neighboring one of the plurality of sensors also detected the security event.

Another example may be found in a security system. The security system includes a first security sensor for detecting a security event. In response to the first security sensor detecting the security event, the first security sensor sends a message to a first neighboring security sensor via a wireless peer-to-peer communication path, the message indicating the detection of the security event by the first security sensor. The first neighboring security sensor either validates the security event by detecting the security event or does not validate the security event by not detecting the security event. The first security sensor and/or the first neighboring security sensor report the security event to a central security controller of the security system via a network that is separate from the wireless peer-to-peer communication path, the reported security event is assigned a confidence score that is dependent on whether the first neighboring security sensor was able to validate the security event or not.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram of an illustrative building control system;
Figure 2 is a flow diagram showing an illustrative method for monitoring a health status of each of a plurality of services running on a building control device of a building control system;
Figure 3 is a flow diagram showing an illustrative method for monitoring a health status of each of a plurality of services running on a building control device of a building control system;
Figure 4 is a flow diagram showing an illustrative method for monitoring services running on a building control device of a building control system;
Figure 5 is a schematic block diagram of an illustrative security system;
Figure 6 is a schematic block diagram of a video camera forming part of the illustrative security system of Figure 5;
Figure 7 is a schematic block diagram of an illustrative security system;
Figure 8 is a flow diagram showing an illustrative method for monitoring device health of a building control device;
Figure 9 is a flow diagram showing an illustrative method for monitoring a health status of each of a plurality of services running on a building control device of a building control system;
Figure 10 is a flow diagram showing an illustrative method for operating a security camera; and
Figures 11A and 11B are flow diagrams that together show an illustrative method for operating a security system.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

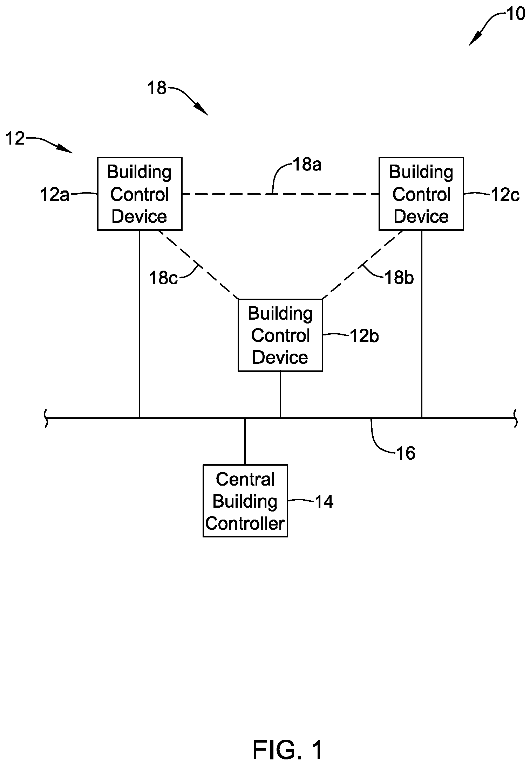

Figure 1 is a schematic block diagram showing an illustrative building control system 10. The illustrative building control system 10 includes a number of building control devices 12, individually labeled as 12a, 12b and 12c. While a total of three building control devices 12 are shown, it will be appreciated that this is merely illustrative, as the building control system 10 may include any number of building control devices 12, and in some instances may include considerably more than three building control devices 12. The building control devices 12 may each represent various security devices. In some instances, the building control devices 12 may each represent various video cameras. The building control system 10 includes a central building controller 14 that may be in communication with the building control devices 12 via a network 16. The network 16 may be a wired network. In some instances, the network 16 may be a wireless network. The network 16 may be a single network, or may represent two or more networks coupled together, for example.

In some instances, the building control system 10 may represent a video monitoring system. The building control devices 12 may each be a video camera, an intrusion sensor or an access control device. In some instances, the building control system 10 may represent a Heating, Ventilating and Air Conditioning (HVAC) system. The building control devices 12 may each be an HVAC device, for example.

In some instances, each of the building control devices 12 may include a wireless communication capability. In some instances, the building control devices 12 may establish a wireless peer-to-peer (P2P) communication path 18 between the individual building control devices 12. As an example, the P2P communication path 18 may include a leg 18a formed between the building control device 12a and the building control device 12c. The P2P communication path 18 may include a leg 18b formed between the building control device 12c and the building control device 12b. The P2P communication path 18 may include a leg 18c formed between the building control device 12b and the building control device 12a. In some instances, the P2P communication path 18 is established dynamically, as building control devices 12 find themselves in communication range with one or more other building control devices 12. Each of the building control devices 12 may dynamically form the P2P communication path 18 with one, two, three or more distinct building control devices 12, limited only by wireless communication ranges and signal strength.

In some instances, a first one of the number of building control devices 12, such as for example the building control device 12a, may establish establishing a wireless peer-to-peer communication path with a second neighboring one of the number of building control devices 12, such as the building control device 12b. The first one of the number of building control devices 12 (building control device 12a) and/or the second one of the number of building control devices 12 (building control device 12b) may repeatedly and proactively monitor a plurality of services running on the first building control device 12a to identify when one or more of the plurality of services running on the first building control device 12a are currently down and/or otherwise non-responsive. In response to identifying that one or more of the plurality of services of the first building control device 12a is are currently down and/or otherwise non-responsive, the second building control device 12b may report a failure via the network 16 to the central building controller 14.

Illustrative services running on a building control device such as a security camera may include, for example, one or more of:

**Table 1**

| Service Name | **Purpose** |
|---|---|
| Onvif server service | Responsible for Head end system integration like Central Monitoring Station (CMS)/Network Video Recorder (NVR) |
| VA service | Responsible to Make sure Video Analytic (Motion, Face detection etc..) working as expected |
| PTZ server | Responsible to make sure - PAN, TILT, ZOOM, IRIS, FOCUS working as expected |
| Media Server | Responsible for streaming the video to requested client |
| RTSP server | Responsible to stream RTSP video to requested client |
| Network Manager | Responsible to make sure network related features are working as expected |
| User manager | Responsible to manage the user configuration / Roles/ permissions |
| Bonjour service | Responsible to make sure respond to auto discovery of cameras to the requested client |
| Firmware Upgrade server service | Responsible to give current Firmware version, check upgrade version compatibility and respond back once upgrade is complete with success/Failure message |
| Health Monitor service | Responsible to monitor camera resource usage like CPU usage increases, Memory Growth etc. |

The services shown in Table 1 are only illustrative, and it is contemplated that different and/or other services may be running on a security camera. Each of these services may be individually tracked and reported when determined to be down and/or otherwise non-responsive (e.g. hung state). It is contemplated that the services may be application initiated services and/or operating system initiated services.

In some instances, in response to the reported failure of a service, the central building controller 14 may take action to correct the one or more of the plurality of services of the first building control device 12a that are currently down and/or otherwise non-responsive. In some instances, the first building control device 12 may include a video camera. In some instances, and as shown in Table 1, the services running on the first building control device 12 may include a video analytics service that applies one or more video analytics to a video stream captured by the video camera. In some instances, the services running on the first building control device 12 may include a camera control service that controls a pan, a tilt, a zoom, a focus, and or an iris of the video camera. In some instances, the services running on the first building control device 12 may include a streaming service that controls streaming of a video stream captured by the video camera. These are just examples.

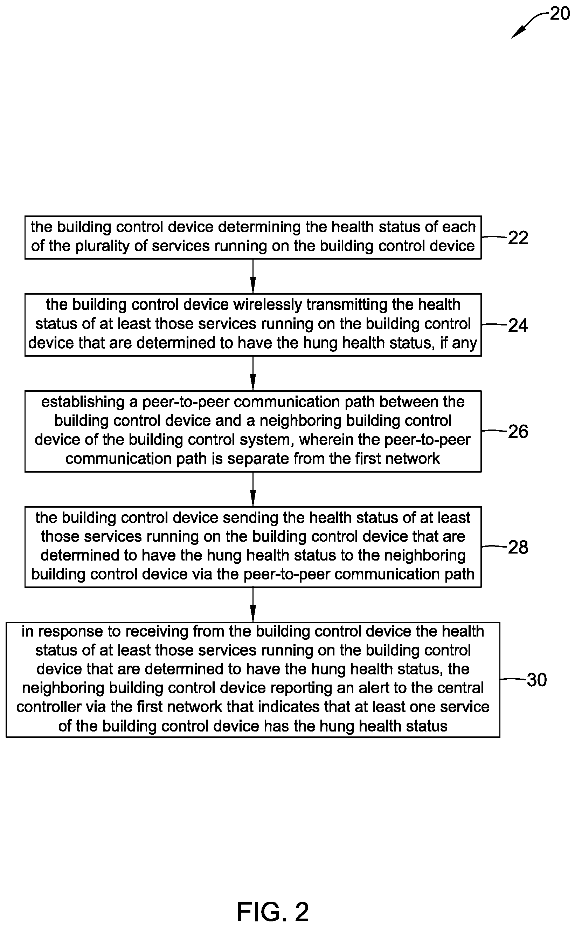

Figure 2 is a flow diagram showing an illustrative method 20 for monitoring a health status of each of a plurality of services running on a building control device (such as the building control devices 12) of a building control system (such as the building control system 10), wherein the health status of each of the plurality of services is selected from two or more predetermined health status conditions including a normal health status and a hung health status, wherein the hung health status indicates that the corresponding service is currently down and/or otherwise non-responsive. The illustrative method 20 includes the building control device determining the health status of each of the plurality of services running on the building control device, as indicated at block 22. The building control device wirelessly transmits the health status of at least those services running on the building control device that are determined to have the hung health status, if any, as indicated at block 24. In some instances, the building control system includes a video monitoring system, and the building control device includes a video camera.

In some instances, the plurality of services may include a video analytics service that applies one or more video analytics to a video stream captured by the video camera. In some instances, the plurality of services may include a camera control service that controls a pan, a tilt, a zoom, a focus, and or an iris of the video camera. In some instances, the plurality of services may include a streaming service that controls streaming of a video stream captured by the video camera. In some instances, the plurality of services may include a network service that controls network communication between the building control device and one or more other devices of the building control system. In some instances, at least some of the plurality of services correspond to one or more application programs running on the building control device, wherein the one or more application programs are separate from and are supported by an operating system of the building control device. In some instances, the building control system may include a video monitoring system, and the building control device may include one of a video camera, an intrusion sensor, and an access control device. In some instances, the building control system may include a Heating, Ventilation and/or Air Conditioning (HVAC) system, and the building control device may include an HVAC device.

In some instances, the building control system includes a central controller, and the building control device is operatively coupled to the central controller via a first network. The method 20 may further include establishing a peer-to-peer communication path between the building control device and a neighboring building control device of the building control system, wherein the peer-to-peer communication path is separate from the first network, as indicated at block 26. In this example, the building control device sends the health status of at least those services running on the building control device that are determined to have the hung health status to the neighboring building control device via the peer-to-peer communication path, as indicated at block 28. In response to receiving from the building control device the health status of at least those services running on the building control device that are determined to have the hung health status, the neighboring building control device reports an alert to the central controller via the first network that indicates that at least one service of the building control device has the hung health status, as indicated at block 30. In some instances, the first network is a wired network. In some instances, the peer-to-peer communication path is a wireless communication path. In some cases, the building control device reports an alert to the central controller via the first network that indicates that at least one service of the building control device has the hung health status.

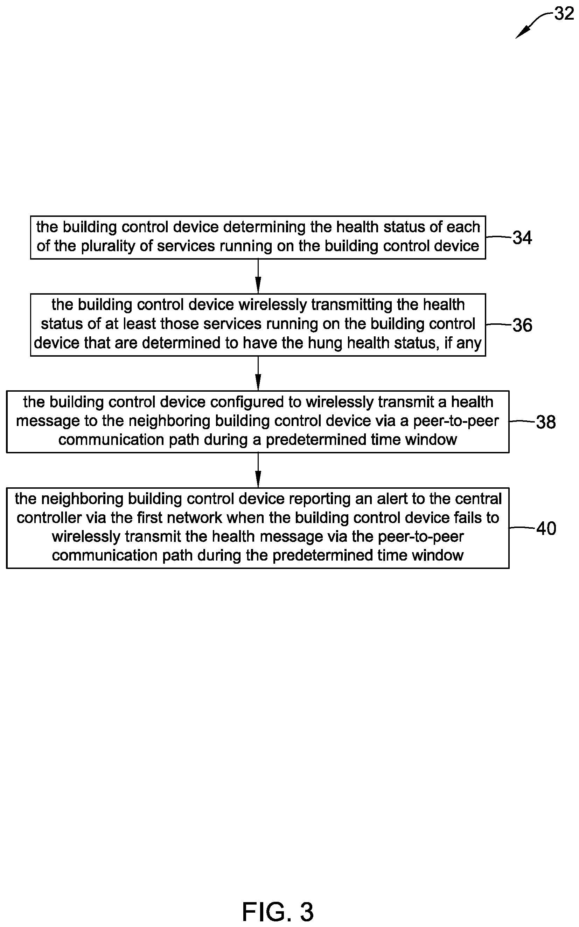

Figure 3 is a flow diagram showing an illustrative method 32 for monitoring a health status of each of a plurality of services running on a building control device (such as the building control devices 12) of a building control system (such as the building control system 10), wherein the health status of each of the plurality of services is selected from two or more predetermined health status conditions including a normal health status and a hung health status, wherein the hung health status indicates that the corresponding service is currently down and/or otherwise non-responsive. The illustrative method 32 includes the building control device determining the health status of each of the plurality of services running on the building control device, as indicated at block 34. The building control device wirelessly transmits the health status of at least those services running on the building control device that are determined to have the hung health status, if any, as indicated at block 36.

In some instances, the building control system includes a central controller, and the building control device and a neighboring building control device of the building control system are operatively coupled to the central controller via a first network. The method 32 may further include the building control device is configured to wirelessly transmit a health message to the neighboring building control device via a peer-to-peer communication path during a predetermined time window, as indicated at block 38. The neighboring building control device reports an alert to the central controller via the first network when the building control device fails to wirelessly transmit the health message via the peer-to-peer communication path during the predetermined time window, as indicated at block 40. As an example, the health message may include the health status of at least those services running on the building control device that are determined to have the hung health status, if any.

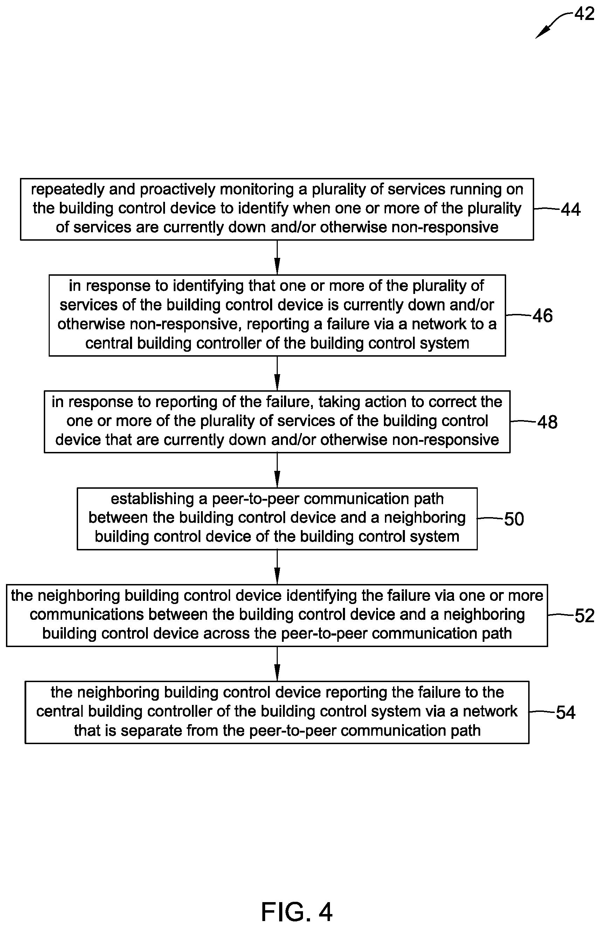

Figure 4 is a flow diagram showing an illustrative method 42 for monitoring services running on a building control device (such as the building control devices 12) of a building control system (such as the building control system 10). The illustrative method 42 includes repeatedly and proactively monitoring a plurality of services running on the building control device to identify when one or more of the plurality of services are currently down and/or otherwise non-responsive, as indicated at block 44. In response to identifying that one or more of the plurality of services of the building control device is currently down and/or otherwise non-responsive, a failure is reported via a network to a central building controller of the building control system, as indicated at block 46.

In some instances, the method 42 may include, in response to reporting of the failure, taking action to correct the one or more of the plurality of services of the building control device that are currently down and/or otherwise non-responsive, as indicated at block 48. As an example, taking action may include rebooting the building control device. As another example, taking action may include restarting the one or more of the plurality of services of the building control device that are currently down and/or otherwise non-responsive. These are just examples.

In some instances, the method 42 may include establishing a peer-to-peer communication path between the building control device and a neighboring building control device of the building control system, as indicated at block 50. The neighboring building control device may identify the failure via one or more communications between the building control device and the neighboring building control device across the peer-to-peer communication path, as indicated at block 52. The neighboring building control device may report the failure to the central building controller of the building control system via a network that is separate from the peer-to-peer communication path, as indicated at block 54.

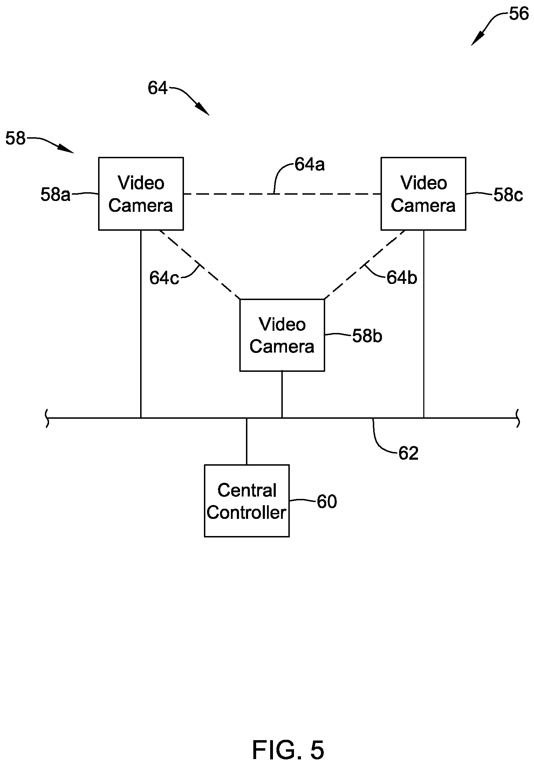

Figure 5 is a schematic block diagram of an illustrative security system 56. The illustrative security system 56 may be considered as being an example of the building control system 10, for example. The security system 56 includes a number of video cameras 58, individually labeled as 58a, 58b and 58c. While a total of three video cameras 58 are shown, it will be appreciated that this is merely illustrative, as the security system 56 may include any number of video cameras 58, and in some instances may include considerably more than three video cameras 58. The security system 56 includers a central controller 60 that may be in communication with the video cameras via a network 62. The network 62 may be a wired network. In some instances, the network 62 may be a wireless network. The network 62 may be a single network, or may represent two or more networks coupled together, for example.

In some instances, each of the video cameras 58 may include a wireless communication capability. In some instances, the video cameras 58 may establish a wireless peer-to-peer (P2P) communication path 64 between the individual video cameras 58. As an example, the P2P communication path 64 may include a leg 64a formed between the video camera 58a and the video camera 58c. The P2P communication path 64 may include a leg 64b formed between the video camera 58c and the video camera 58b. The P2P communication path 64 may include a leg 64c formed between the video camera 58b and the video camera 58a. In some instances, the P2P communication path 64 is established dynamically, as video cameras 58 find themselves in communication range with one or more other video cameras 58. Each of the video cameras 58 may dynamically form the P2P communication path 64 with one, two, three or more distinct video cameras 58, limited only by wireless communication ranges and signal strength.

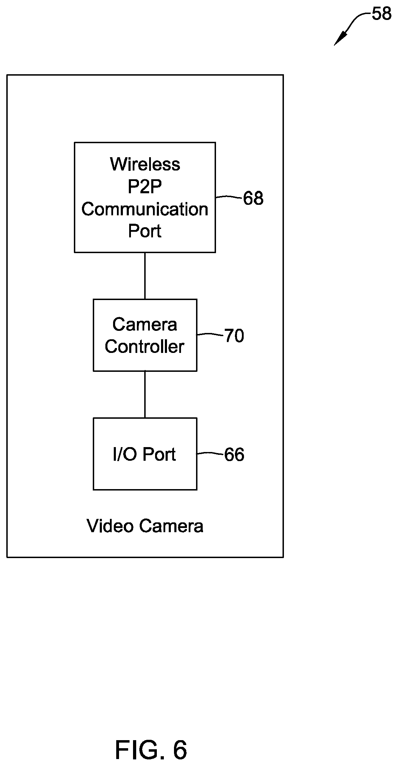

Figure 6 is a schematic block diagram of an illustrative video camera 58. The details shown within the video camera 58 may be included in any or all of the video cameras 58, for example. The video camera 58 includes an I/O port 66 for communicating a video stream captured by the corresponding video camera 58 to the central controller 60 via the one or more networks 62. The video camera 58 includes a wireless peer-to-peer communication port 68 for establishing a wireless peer-to-peer communication with one or more neighboring ones of the plurality of video cameras 58 via the P2P communication path 64, for example. The video camera 58 includes a camera controller 70 that is operatively coupled to the I/O port 66 and the wireless peer-to-peer communication port 68.,

In some cases, the camera controller 70 includes a lower function mode, wherein in the lower function mode, the corresponding video camera produces a lower quality video stream that causes the corresponding video camera to consume less power and/or causes the corresponding video camera to consume less bandwidth when communicating the lower quality video stream to the central controller via the one or more networks. The camera controller 70 may also include a higher function mode, wherein in the higher function mode, the corresponding video camera produces a higher quality video stream that causes the corresponding video camera to consume more power and/or causes the corresponding video camera to consume more bandwidth when communicating the higher quality video stream to the central controller via the one or more networks. When so provided, the camera controller 70 is configured to detect an occurrence of a security event adjacent the first one of the plurality of video cameras 58 when the first one of the plurality of video cameras 58 is in the lower function mode, and in response, the camera controller 70 is configured to switch to the higher function mode and send a message to one or more neighboring ones of the plurality of video cameras 58 via the wireless peer-to-peer communication port 68 to switch the one or more neighboring ones of the plurality of video cameras 58 from their lower function mode to their higher function mode.

In some instances, the camera controller 70 may be configured to detect an occurrence of a security event adjacent the first one of the plurality of video cameras 58 by detecting motion in the lower quality video stream. In some instances, the camera controller 70 may be configured to detect an occurrence of a security event adjacent the first one of the plurality of video cameras 58 by detecting motion from a motion sensor (e.g. PIR sensor) operatively coupled to the camera controller 70.

In some instances, the camera controller 70 may place the first one of the plurality of video cameras 58 in the lower function mode in accordance with a programmable schedule. In some instances, the camera controller 70 may remain in the higher function mode for a predetermined time after no security events are detected in the higher function mode. In some instances, the camera controller 70 may be configured to detect an occurrence of a security event in a predetermined region adjacent the first one of the plurality of video cameras 58 when the first one of the plurality of video cameras 58 is in the lower function mode, and in response, the camera controller 70 may be configured to switch to the higher function mode and send a message to one or more neighboring ones of the plurality of video cameras 58 via the wireless peer-to-peer communication port 68 to switch the one or more neighboring ones of the plurality of video cameras 58 from their lower function mode to their higher function mode. In some cases, the predefined region may represent only part of the field of view of the first one of the plurality of video cameras 58 (e.g. region corresponding to a window or a door).

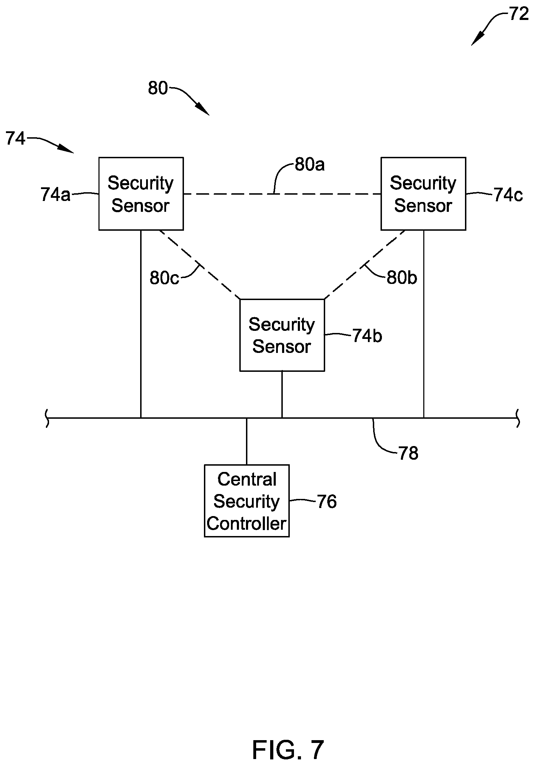

Figure 7 is a schematic block diagram of an illustrative security system 72. The illustrative security system 72 may be considered as being an example of the building control system 10, for example. The security system 72 includes a number of security sensors 74, individually labeled as 74a, 74b and 74c. While a total of three security sensors 74are shown, it will be appreciated that this is merely illustrative, as the security system 72 may include any number of security sensors 74, and in some instances may include considerably more than three security sensors 74. The security system 72 includers a central security controller 76 that may be in communication with the security sensors 74 via a network 78. The network 78 may be a wired network. In some instances, the network 78 may be a wireless network. The network 78 may be a single network, or may represent two or more networks coupled together, for example.

In some instances, each of the security sensors 74 may include a wireless communication capability. In some instances, the security sensors 74 may establish a wireless peer-to-peer (P2P) communication path 80 between the individual security sensors 74. As an example, the P2P communication path 80 may include a leg 80a formed between the security sensor 74a and the security sensor 74c. The P2P communication path 80 may include a leg 80b formed between the security sensor 74c and the security sensor 74b. The P2P communication path 80 may include a leg 80c formed between the security sensor 74b and the security sensor 74a. In some instances, the P2P communication path 80 is established dynamically, as security sensors 74 find themselves in communication range with one or more other security sensors 74. Each of the security sensors 74 may dynamically form the P2P communication path 80 with one, two, three or more distinct security sensors 74, limited only by wireless communication ranges and signal strength.

The security sensors 74 may be considered as including a first security sensor, such as the security sensor 74a, that is configured for detecting a security event. In response to the first security sensor 74a detecting the security event, the first security sensor 74a may send a message to a first neighboring security sensor (such as the security sensor 74b) via the wireless peer-to-peer communication path 80, the message indicating the detection of the security event by the first security sensor 74a. The first neighboring security sensor 74b either validates the security event by detecting the security event or does not validate the security event by not detecting the security event. The first security sensor 74a and/or the first neighboring security sensor 74b report the security event to the central security controller 76 of the security system 72 via the network 78 that is separate from the wireless peer-to-peer communication path 80, the reported security event is assigned a confidence score that is dependent on whether the first neighboring security sensor 74a was able to validate the security event or not. In some instances, the first security sensor 74a may be of a different sensor type than the first neighboring security sensor 74b. As an example, the first security sensor 74a may include a camera and the first neighboring security sensor 74b may include a motion sensor.

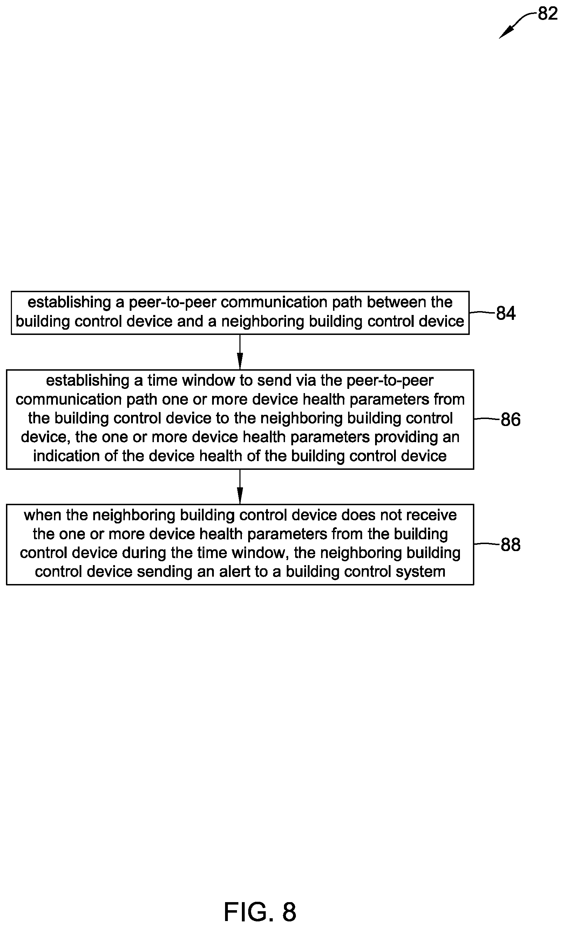

Figure 8 is a flow diagram showing an illustrative method 82 for monitoring device health of a building control device. The illustrative method 82 includes establishing a peer-to-peer communication path between the building control device and a neighboring building control device, as indicated at block 84. A time window is established to send via the peer-to-peer communication path one or more device health parameters from the building control device to the neighboring building control device, the one or more device health parameters providing an indication of the device health of the building control device, as indicated at block 86. When the neighboring building control device does not receive the one or more device health parameters from the building control device during the time window, the neighboring building control device sends an alert to a building control system, as indicated at block 88. In some instances, the neighboring building control device sends the alert to the building control system via a communication network that is separate from the peer-to-peer communication path.

In some cases, a plurality of building control devices may be configured and arranged such that each of the plurality of building control devices communicate with a neighboring one of the plurality of building control devices via a peer-to-peer communication path in a roundrobin fashion. In such an arrangement, each building control devices communicate with the neighboring one of the plurality of building control devices during an assigned time window. When a communication is not received during the respective time window, the building control device that was supposed to transmit during the respective time window has gone non-responsive, and in some cases an alert may be provided to the central security controller. When a communication is received during the respective time window, the status of one or more device health parameters received from the building control device may be analyzed by the neighboring building control device, and an alert may be provided to the central security controller when appropriate.

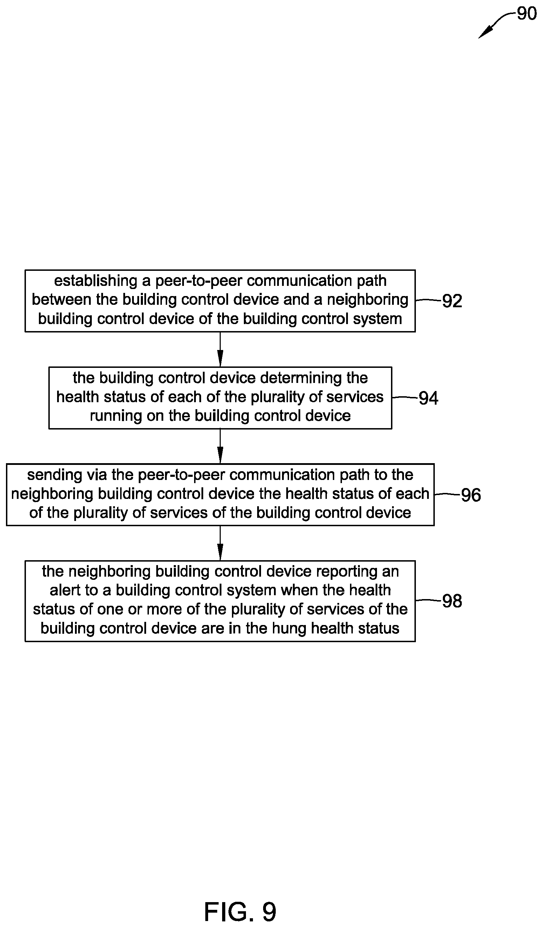

Figure 9 is a flow diagram showing an illustrative method 90 for monitoring a health status of each of a plurality of services running on a building control device of a building control system, wherein the health status of each of the plurality of services is selected from two or more predetermined health status conditions including a normal health status and a hung health status, wherein the hung health status indicates that the corresponding service is currently down and/or otherwise non-responsive. The illustrative method 90 includes establishing a peer-to-peer communication path between the building control device and a neighboring building control device of the building control system, as indicated at block 92. The building control device determines the health status of each of the plurality of services running on the building control device, as indicated at block 94. The method 00 includes sending via the peer-to-peer communication path to the neighboring building control device the health status of each of the plurality of services of the building control device, as indicated at block 96. The neighboring building control device reports an alert to a building control system when the health status of one or more of the plurality of services of the building control device are in the hung health status, as indicated at block 98. In some instances, the neighboring building control device may report the alert to the building control system via a communication network that is separate from the peer-to-peer communication path.

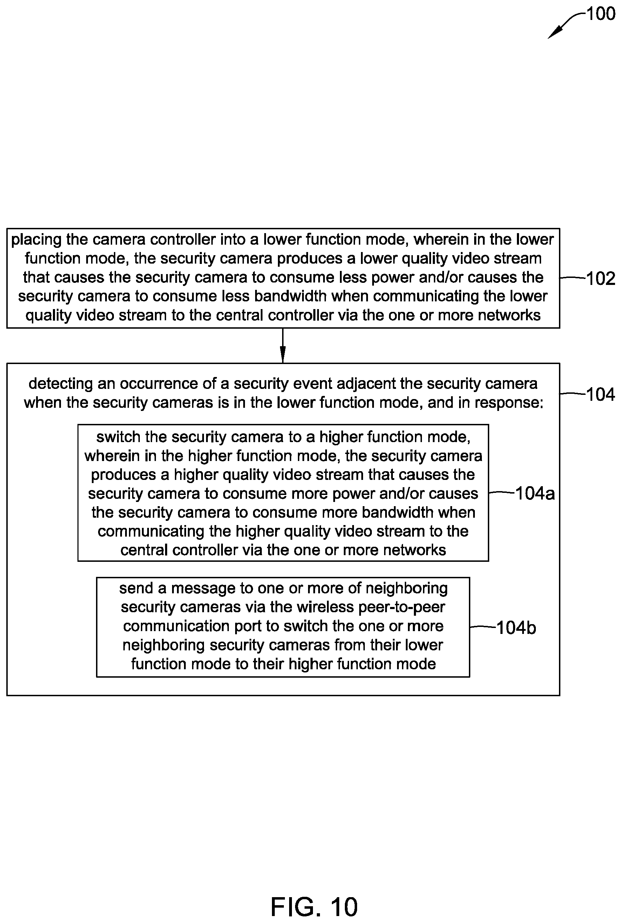

Figure 10 is a flow diagram showing an illustrative method 100 for operating a security camera that includes an I/O port for communicating a video stream captured by the corresponding video camera to the central controller via the one or more networks, a wireless peer-to-peer communication port for establishing a wireless peer-to-peer communication with one or more neighboring security cameras. The illustrative method 100 includes placing the camera controller into a lower function mode, wherein in the lower function mode, the security camera produces a lower quality video stream that causes the security camera to consume less power and/or causes the security camera to consume less bandwidth when communicating the lower quality video stream to the central controller via the one or more networks, as indicated at block 102. An occurrence of a security event adjacent the security camera is detected when the security cameras is in the lower function mode, as indicated at block 104. In response, the security camera is switched to a higher function mode, wherein in the higher function mode, the security camera produces a higher quality video stream that causes the security camera to consume more power and/or causes the security camera to consume more bandwidth when communicating the higher quality video stream to the central controller via the one or more networks, as indicated at block 104a. Also, in response, a message is sent to one or more of neighboring security cameras via the wireless peer-to-peer communication port to switch the one or more neighboring security cameras from their lower function mode to their higher function mode, as indicated at block 104b.

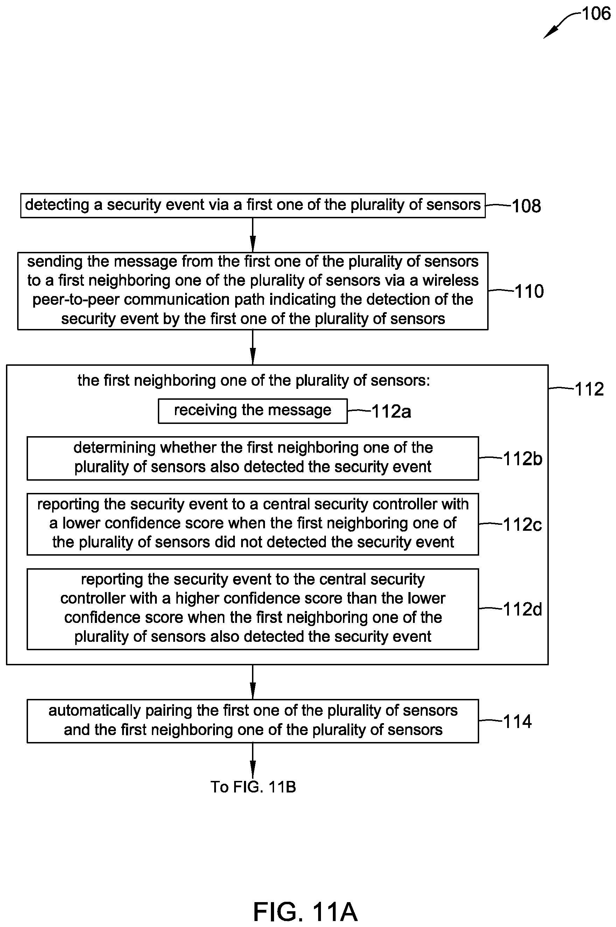

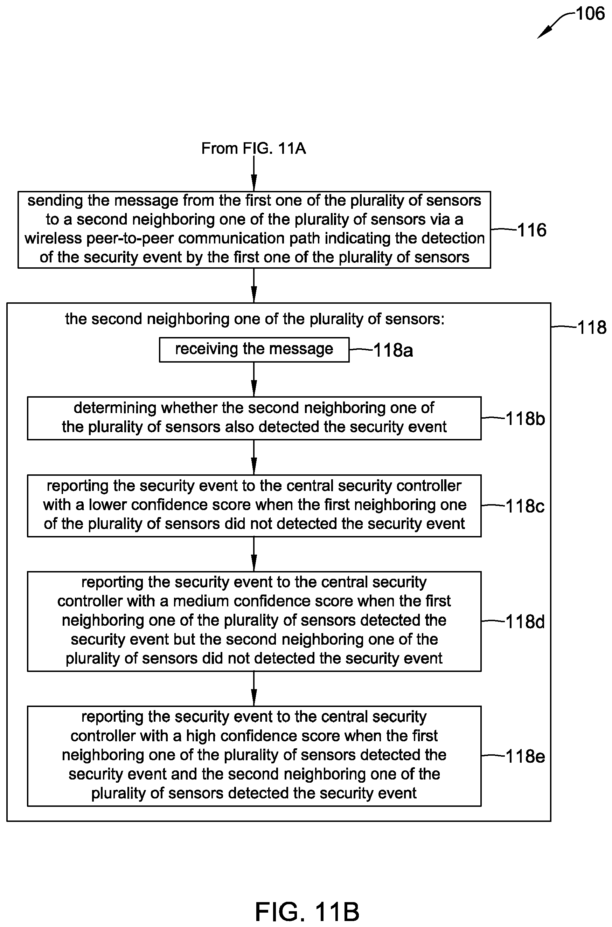

Figures 11A and 11B are flow diagrams that together show an illustrative method 106 for operating a security system that includes a plurality of sensors each for detecting a corresponding security event. The method 106 includes detecting a security event via a first one of the plurality of sensors, as indicated at block 108. A message indicating the detection of the security event by the first one of the plurality of sensors is sent from the first one of the plurality of sensors to a first neighboring one of the plurality of sensors via a wireless peer-to-peer communication path indicating the detection of the security event by the first one of the plurality of sensors, as indicated at block 110. The first neighboring one of the plurality of sensors carries out several actions, as indicated at block 112. The several actions include receiving the message, as indicated at block 112a. The several actions include determining whether the first neighboring one of the plurality of sensors also detected the security event, as indicated at block 112b. The several actions include reporting the security event to a central security controller with a lower confidence score when the first neighboring one of the plurality of sensors did not detected the security event, as indicated at lock 112c. The several actions include reporting the security event to the central security controller with a higher confidence score than the lower confidence score when the first neighboring one of the plurality of sensors also detected the security event, as indicated at block 112d. In some instances, the first one of the plurality of sensors may be of a different sensor type than the first neighboring one of the plurality of sensors. As an example, the first one of the plurality of sensors may include a camera and the first neighboring one of the plurality of sensors may include a motion sensor. In some instances, the method 106 may further include automatically pairing the first one of the plurality of sensors and the first neighboring one of the plurality of sensors.

In some instances, and as continued on Figure 11B, the method 106 may include sending the message from the first one of the plurality of sensors to a second neighboring one of the plurality of sensors via a wireless peer-to-peer communication path indicating the detection of the security event by the first one of the plurality of sensors, as indicated at block 116. The second neighboring one of the plurality of sensors takes several actions, as indicated at block 118. The actions include receiving the message, as indicated at block 118a. The actions include determining whether the second neighboring one of the plurality of sensors also detected the security event, as indicated at block 118b. The actions include reporting the security event to the central security controller with a lower confidence score when the first neighboring one of the plurality of sensors did not detected the security event, as indicated at block 118c. The actions include reporting the security event to the central security controller with a medium confidence score when the first neighboring one of the plurality of sensors detected the security event but the second neighboring one of the plurality of sensors did not detected the security event, as indicated at block 118d. The actions include reporting the security event to the central security controller with a high confidence score when the first neighboring one of the plurality of sensors detected the security event and the second neighboring one of the plurality of sensors detected the security event, as indicated at block 118e.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for monitoring a health status of each of a plurality of services running on a building control device (12) of a building control system (10), wherein each of the plurality of services corresponds to an application initiated service or an operating system initiated service of the building control device (12), and wherein the health status of each of the plurality of services is selected from two or more predetermined health status conditions including a normal health status and a hung health status, wherein the hung health status indicates that the corresponding service is currently down and/or otherwise non-responsive, the method comprising:
the building control device (12) individually tracking and reporting the health status of each of the plurality of services running on the building control device (12); and
the building control device (12) wirelessly transmitting the health status of at least those services running on the building control device (12) that are reported to have the hung health status, if any.

2. The method of claim 1, wherein the building control system (10) comprises a video monitoring system, and the building control device (12) comprises a video camera (58).

3. The method of claim 1, wherein the building control system (10) comprises a central controller (14), and wherein the building control device (12) is operatively coupled to the central controller (14) via a first network (16), the method further comprising:
establishing a peer-to-peer communication path (18) between the building control device (12) and a neighboring building control device (12) of the building control system (10), wherein the peer-to-peer communication path (18) is separate from the first network (16);
the building control device (12) sending the health status of at least those services running on the building control device (12) that are determined to have the hung health status to the neighboring building control device (12) via the peer-to-peer communication path (18); and
in response to receiving from the building control device (12) the health status of at least those services running on the building control device (12) that are determined to have the hung health status, the neighboring building control device (12) reporting an alert to the central controller (14) via the first network (16) that indicates that at least one service of the building control device (12) has the hung health status.

4. The method of claim 3, wherein:
the first network (16) is a wired network; and
the peer-to-peer communication path (18) is a wireless communication path.

5. The method of claim 1, wherein the building control system (10) comprises a central controller (14), and wherein the building control device (12) and a neighboring building control device (12) of the building control system (10) are operatively coupled to the central controller (14) via a first network (16), the method further comprising:
the building control device (12) configured to wirelessly transmit a health message to the neighboring building control device (12) via a peer-to-peer communication path (18) during a predetermined time window; and
the neighboring building control device (12) reporting an alert to the central controller (14) via the first network (16) when the building control device (12) fails to wirelessly transmit the health message via the peer-to-peer communication path (18) during the predetermined time window.

6. The method of claim 5, wherein the health message includes the health status of at least those services running on the building control device (12) that are determined to have the hung health status, if any.

7. The method of claim 2, wherein the plurality of services comprises one or more of:
a video analytics service that applies one or more video analytics to a video stream captured by the video camera (58);
a camera control service that controls a pan, a tilt, a zoom, a focus, and or an iris of the video camera (58);
a streaming service that controls streaming of a video stream captured by the video camera (58); and
a network service that controls network communication between the video camera (58) and one or more other devices of the building control system (10).

8. The method of claim 1, wherein at least some of the plurality of services are initiated by one or more application programs running on the building control device (12), wherein the one or more application programs are separate from and are supported by an operating system of the building control device (12).

9. The method of claim 1, wherein the building control system (10) comprises:
a video monitoring system, and the building control device (12) comprises one of a video camera (58), an intrusion sensor, and an access control device; and/or
a Heating, Ventilation and/or Air Conditioning (HVAC) system, and the building control device (12) comprises an HVAC device.

10. The method of claim 1, wherein determining the health status of each of the plurality of services running on the building control device (12) comprises:
repeatedly and proactively monitoring each of the plurality of services running on the building control device (12) and individually report when a corresponding one of the plurality of services is currently down and/or otherwise non-responsive.

11. The method of claim 1, wherein wirelessly transmitting the health status of at least those services running on the building control device (12) that are reported to have the hung health status, if any, comprises:
reporting a failure via a network to a central building controller (14) of the building control system (10).

12. The method of claim 11, wherein in response to reporting of the failure, taking action to correct the one or more of the plurality of services of the building control device (12) that are currently down and/or otherwise non-responsive, wherein taking action includes one or more of:
rebooting the building control device (12); and
restarting the one or more of the plurality of services of the building control device (12) that are currently down and/or otherwise non-responsive.

13. A building control system (10) comprising:
a plurality of building control devices (12);
a central building controller (14), wherein the plurality of building control devices (12) are operatively coupled to the central building controller (14) via one or more networks (16);
a first one of the plurality of building control devices (12) establishing a wireless peer-to-peer communication path (18) with a second neighboring one of the plurality of building control devices (12), wherein the wireless peer-to-peer communication path (18) is separate from the one or more networks (16);
the first one of the plurality of building control devices (12) and/or the second one of the plurality of building control devices (12) repeatedly and proactively individually monitoring each of a plurality of services running on the first building control device (12) to identify when one or more of the plurality of services running on the first building control device (12) are currently down and/or otherwise non-responsive, wherein each of the plurality of services corresponds to an application initiated service and/or an operating system initiated service running on the first building control device (12); and
in response to identifying that one or more of the plurality of services of the first one of the plurality of building control devices (12) is/are currently down and/or otherwise non-responsive, the second one of the plurality of building control devices (12) reporting a failure via the one or more networks (16) to the central building controller (14).

14. The building control system of claim 13, wherein the plurality of building control devices (12) includes a plurality of sensors each for detecting a corresponding security event, and wherein:
in response to detecting a security event via a first one of the plurality of sensors, the first one of the plurality of sensors sending a message from the first one of the plurality of sensors to a first neighboring one of the plurality of sensors via the wireless peer-to-peer communication path (18) indicating the detection of the security event by the first one of the plurality of sensors;
in response to the first neighboring one of the plurality of sensors receiving the message, the first neighboring one of the plurality of sensors determines whether the first neighboring one of the plurality of sensors also detected the security event; and
the first neighboring one of the plurality of sensors is configured to report the security event to the central building controller (14) with a lower confidence score when the first neighboring one of the plurality of sensors did not detected the security event and is configured to report the security event to the central building controller (14) with a higher confidence score than the lower confidence score when the first neighboring one of the plurality of sensors also detected the security event.

15. The building control system of claim 13, wherein the plurality of building control devices (12) includes a plurality of security cameras (58) each including an I/O port (66) for communicating a video stream captured by the corresponding video camera (58) to a central controller (14) via one or more networks (16), and a wireless peer-to-peer communication port (68) for establishing a wireless peer-to-peer communication (18) with one or more neighboring security cameras (58), wherein:
each of the plurality of security cameras (58) is configured to place the corresponding camera controller (70) into a lower function mode, wherein in the lower function mode, the corresponding security camera (58) produces a lower quality video stream that causes the corresponding security camera (58) to consume less power and/or causes the corresponding security camera (58) to consume less bandwidth when communicating the lower quality video stream to the central controller (14) via the one or more networks (16);
in response to detecting an occurrence of a security event by a corresponding security camera (58) when the corresponding security camera (58) is in the lower function mode, the corresponding security camera (58) is configured to switch the corresponding security camera (58) to a higher function mode, wherein in the higher function mode, the corresponding security camera (58) produces a higher quality video stream that causes the corresponding security camera (58) to consume more power and/or causes the corresponding security camera (58) to consume more bandwidth when communicating the higher quality video stream to the central controller (14) via the one or more networks (16), and the corresponding security camera (58) is configured to send a message to one or more neighboring security cameras (58) via the wireless peer-to-peer communication port (18) to switch the one or more neighboring security cameras (58) from their lower function mode to their higher function mode.

## Patentansprüche

1. Verfahren zum Überwachen des Gesundheitszustands von jedem einer Mehrzahl von Diensten, die auf einer Gebäudesteuerungsvorrichtung (12) eines Gebäudesteuerungssystems (10) laufen, wobei jeder der Mehrzahl von Diensten einem anwendungsinitiierten Dienst oder einem betriebssysteminitiierten Dienst der Gebäudesteuerungsvorrichtung (12) entspricht, und wobei der Gesundheitszustand jedes der Mehrzahl von Diensten aus zwei oder mehr vorbestimmten Gesundheitszustandsbedingungen ausgewählt wird, einschließlich eines normalen Gesundheitszustands und eines aufgehängt-Gesundheitszustands, wobei der aufgehängt-Gesundheitszustand angibt, dass der entsprechende Dienst derzeit ausgefallen ist und/oder anderweitig nicht antwortet, das Verfahren umfassend:
dass die Gebäudesteuerungsvorrichtung (12) den Gesundheitszustand jedes der Mehrzahl von Diensten der auf der Gebäudesteuerungsvorrichtung (12) laufenden Dienste einzeln verfolgt und meldet; und
dass die Gebäudesteuerungsvorrichtung (12) den Gesundheitszustand mindestens derjenigen Dienste drahtlos überträgt, die auf der Gebäudesteuerungsvorrichtung (12) laufen, für die gemeldet wird, dass sie den aufgehängt-Gesundheitszustand aufweisen, sofern vorhanden.

2. Verfahren nach Anspruch 1, wobei das Gebäudesteuerungssystem (10) ein Videoüberwachungssystem umfasst und die Gebäudesteuerungsvorrichtung (12) eine Videokamera (58) umfasst.

3. Verfahren nach Anspruch 1, wobei das Gebäudesteuerungssystem (10) eine zentrale Steuerung (14) umfasst und wobei die Gebäudesteuerungsvorrichtung (12) über ein erstes Netzwerk (16) funktionsmäßig mit der zentralen Steuerung (14) gekoppelt ist, das Verfahren ferner umfassend:
Aufbauen eines Peer-to-Peer-Kommunikationspfads (18) zwischen der Gebäudesteuerungsvorrichtung (12) und einer benachbarten Gebäudesteuerungsvorrichtung (12) des Gebäudesteuerungssystems (10), wobei der Peer-to-Peer-Kommunikationspfad (18) vom ersten Netzwerk (16) getrennt ist;
dass die Gebäudesteuerungsvorrichtung (12) den Gesundheitszustand mindestens derjenigen Dienste, die auf der Gebäudesteuerungsvorrichtung (12) laufen und bei denen bestimmt wurde, dass sie den aufgehängt-Gesundheitszustand aufweisen, über den Peer-to-Peer-Kommunikationspfad (18) an die benachbarte Gebäudesteuerungsvorrichtung (12) sendet; und
als Antwort auf Empfangen des Gesundheitszustands mindestens derjenigen Dienste, die auf der Gebäudesteuerungsvorrichtung (12) laufen, der Gebäudesteuerungsvorrichtung (12), und bei denen bestimmt wurde, dass sie den aufgehängt-Gesundheitszustand aufweisen, die benachbarte Gebäudesteuerungsvorrichtung (12) über das erste Netzwerk (16) eine Warnung an die zentrale Steuerung (14) meldet, die angibt, dass mindestens ein Dienst der Gebäudesteuerungsvorrichtung (12) den aufgehängt-Gesundheitszustand aufweist.

4. Verfahren nach Anspruch 3, wobei:
das erste Netzwerk (16) ein kabelgebundenes Netzwerk ist; und
der Peer-to-Peer-Kommunikationspfad (18) ein drahtloser Kommunikationspfad ist.

5. Verfahren nach Anspruch 1, wobei das Gebäudesteuerungssystem (10) eine zentrale Steuerung (14) umfasst und wobei die Gebäudesteuerungsvorrichtung (12) und eine benachbarte Gebäudesteuerungsvorrichtung (12) des Gebäudesteuerungssystems (10) über ein erstes Netzwerk (16) funktionell mit der zentralen Steuerung (14) gekoppelt sind, das Verfahren ferner umfassend:
dass die Gebäudesteuerungsvorrichtung (12) dazu konfiguriert ist, während eines vorbestimmten Zeitfensters eine Gesundheitsnachricht über einen Peer-to-Peer-Kommunikationspfad (18) drahtlos an die benachbarte Gebäudesteuerungsvorrichtung (12) zu übertragen; und
dass die benachbarte Gebäudesteuerungsvorrichtung (12) eine Warnung über das erste Netzwerk (16) an die zentrale Steuerung (14) meldet, wenn die Gebäudesteuerungsvorrichtung (12) die Gesundheitsnachricht nicht innerhalb des vorbestimmten Zeitfensters über den Peer-to-Peer-Kommunikationspfad (18) drahtlos überträgt.

6. Verfahren nach Anspruch 5, wobei die Gesundheitsnachricht den Gesundheitszustand mindestens derjenigen Dienste einschließt, die auf der Gebäudesteuerungsvorrichtung (12) laufen, bei denen bestimmt wird, dass sie den aufgehängt-Gesundheitszustand aufweisen, sofern vorhanden.

7. Verfahren nach Anspruch 2, wobei die Mehrzahl von Diensten eines oder mehrere umfasst von:
einem Videoanalysedienst, der eine oder mehrere Videoanalysen auf einen von der Videokamera (58) erfassten Videostream anwendet;
einem Kamerasteuerungsdienst, der eine Schwenk-, eine Neige-, eine Zoom-, eine Fokus- und/oder eine Blendensteuerung der Videokamera (58) steuert;
einem Streaming-Dienst, der das Streamen eines von der Videokamera (58) erfassten Videostreams steuert; und
einem Netzwerkdienst, der die Netzwerkkommunikation zwischen der Videokamera (58) und einer oder mehreren anderen Vorrichtungen des Gebäudesteuerungssystems (10) steuert.

8. Verfahren nach Anspruch 1, wobei mindestens einige der Mehrzahl von Diensten durch ein oder mehrere Anwendungsprogramme initiiert werden, die auf der Gebäudesteuerungsvorrichtung (12) laufen, wobei das eine oder die mehreren Anwendungsprogramme von einem Betriebssystem der Gebäudesteuerungsvorrichtung (12) getrennt sind und davon unterstützt sind.

9. Verfahren nach Anspruch 1, wobei das Gebäudesteuerungssystem (10) umfasst:
ein Videoüberwachungssystem, wobei die Gebäudesteuerungsvorrichtung (12) eines von einer Videokamera (58), einem Einbruchssensor und einer Zugangssteuerungsvorrichtung umfasst; und/oder
ein Heizungs-, Lüftungs- und/oder Klimaanlagen-System (HVAC), und die Gebäudesteuerungsvorrichtung (12) umfasst eine HVAC-Vorrichtung.

10. Verfahren nach Anspruch 1, wobei das Bestimmen des Gesundheitszustands jeder Mehrzahl von Diensten, die auf der Gebäudesteuerungsvorrichtung (12) ausgeführt werden, umfasst:
wiederholt und proaktiv jede der Mehrzahl von Diensten, die auf der Gebäudesteuerungsvorrichtung (12) laufen, zu überwachen und einzeln zu melden, wenn ein entsprechender Dienst aus der Mehrzahl von Diensten derzeit ausgefallen ist und/oder anderweitig nicht antwortet.

11. Verfahren nach Anspruch 1, wobei drahtloses Übertragen des Gesundheitszustands mindestens derjenigen Dienste, die auf der Gebäudesteuerungsvorrichtung (12) laufen, für die gemeldet wird, dass sie den aufgehängt-Gesundheitszustand aufweisen, sofern zutreffend, umfasst:
Melden eines Ausfalls über ein Netzwerk an eine zentrale Gebäudesteuerung (14) des Gebäudesteuerungssystems (10).

12. Verfahren nach Anspruch 11, wobei als Antwort auf Melden des Ausfalls Maßnahmen ergriffen werden, um den einen oder die mehreren der Mehrzahl von Diensten der Gebäudesteuerungsvorrichtung (12) zu korrigieren, die derzeit ausgefallen sind und/oder anderweitig nicht antworten, wobei das Ergreifen von Maßnahmen eines oder mehrere einschließt von:
Neustarten der Gebäudesteuerungsvorrichtung (12); und
Wiederanlauf eines oder mehrerer der Mehrzahl von Diensten der Gebäudesteuerungsvorrichtung (12), die derzeit ausgefallen sind und/oder anderweitig nicht antworten.

13. Gebäudesteuerungssystem (10) umfassend:
eine Mehrzahl von Gebäudesteuerungsvorrichtungen (12);
eine zentrale Gebäudesteuerung (14), wobei die Mehrzahl von Gebäudesteuerungsvorrichtungen (12) über ein oder mehrere Netzwerke (16) funktionell mit der zentralen Gebäudesteuerung (14) gekoppelt ist;
dass eine erste der Mehrzahl von Gebäudesteuerungsvorrichtungen (12) einen drahtlosen Peer-to-Peer-Kommunikationspfad (18) mit einer zweiten benachbarten der Mehrzahl von Gebäudesteuerungsvorrichtungen (12) aufbaut, wobei der drahtlose Peer-to-Peer-Kommunikationspfad (18) von dem einen oder den mehreren Netzwerken (16) getrennt ist;
dass die erste der Mehrzahl von Gebäudesteuerungsvorrichtungen (12) und/oder die zweite der Mehrzahl von Gebäudesteuerungsvorrichtungen (12) wiederholt und proaktiv einzeln jeden einer Mehrzahl von Diensten überwacht, die auf der ersten Gebäudesteuerungsvorrichtung (12) laufen, um zu identifizieren, wann einer oder mehrere einer Mehrzahl von Diensten, die auf der ersten Gebäudesteuerungsvorrichtung (12) laufen, derzeit ausgefallen sind und/oder anderweitig nicht antworten, wobei jeder der Mehrzahl von Diensten einem anwendungsinitiierten Dienst und/oder einem vom Betriebssystem initiierten Dienst entspricht, der auf der ersten Gebäudesteuerungsvorrichtung (12) läuft; und
als Antwort auf Identifizieren, dass einer oder mehrere der Mehrzahl von Diensten der ersten der Mehrzahl von Gebäudesteuerungsvorrichtungen (12) derzeit ausgefallen ist und/oder anderweitig nicht antwortet, die zweite der Mehrzahl von Gebäudesteuerungsvorrichtungen (12) über das eine oder die mehreren Netzwerke (16) einen Ausfall an die zentrale Gebäudesteuerung (14) meldet.

14. Gebäudesteuerungssystem nach Anspruch 13, wobei die Mehrzahl von Gebäudesteuerungsvorrichtungen (12) eine Mehrzahl von Sensoren jeweils zum Detektieren eines entsprechenden Sicherheitsereignisses einschließt, und wobei:
als Antwort auf Detektieren eines Sicherheitsereignisses über einen ersten der Mehrzahl von Sensoren, der erste der Mehrzahl von Sensoren eine Nachricht von dem ersten der Mehrzahl von Sensoren an einen ersten benachbarten der Mehrzahl von Sensoren über den drahtlosen Peer-to-Peer-Kommunikationspfad (18) sendet, die die Detektion des Sicherheitsereignisses durch den ersten der Mehrzahl von Sensoren angibt;
als Antwort darauf, dass der erste benachbarte Sensor aus der Mehrzahl von Sensoren die Nachricht empfangen hat, der erste benachbarte Sensor aus der Mehrzahl von Sensoren bestimmt, ob der erste benachbarte Sensor aus der Mehrzahl von Sensoren das Sicherheitsereignis auch detektiert hat; und
der erste benachbarte Sensor aus der Mehrzahl von Sensoren dazu konfiguriert ist, das Sicherheitsereignis mit einem niedrigeren Konfidenzwert an die zentrale Gebäudesteuerung (14) zu melden, wenn der erste benachbarte Sensor aus der Mehrzahl von Sensoren das Sicherheitsereignis nicht detektiert hat, und dazu konfiguriert ist, das Sicherheitsereignis mit einem höheren Konfidenzwert als dem niedrigeren Konfidenzwert an die zentrale Gebäudesteuerung (14) zu melden, wenn der erste benachbarte Sensor aus der Mehrzahl von Sensoren das Sicherheitsereignis auch detektiert hat.

15. Gebäudesteuerungssystem nach Anspruch 13, wobei die Mehrzahl von Gebäudesteuerungsvorrichtungen (12) eine Mehrzahl von Sicherheitskameras (58) einschließt, von denen jede einen E/A-Anschluss (66) zum Übermitteln eines von der entsprechenden Videokamera (58) erfassten Videostreams an eine zentrale Steuerung (14) über ein oder mehrere Netzwerke (16) einschließt, sowie einen drahtlosen Peer-to-Peer-Kommunikationsanschluss (68) zum Aufbauen einer drahtlosen Peer-to-Peer-Kommunikation (18) mit einer oder mehreren benachbarten Sicherheitskameras (58), wobei:
jede der Mehrzahl von Sicherheitskameras (58) dazu konfiguriert ist, die entsprechende Kamerasteuerung (70) in einen niedrigen Betriebsmodus zu versetzen, wobei im niedrigen Betriebsmodus die entsprechende Sicherheitskamera (58) einen Videostream niedriger Qualität erzeugt, was dazu führt, dass die entsprechende Sicherheitskamera (58) weniger Strom verbraucht und/oder dass die entsprechende Sicherheitskamera (58) weniger Bandbreite verbraucht, wenn sie den Videostream niedriger Qualität über das eine oder die mehrere Netzwerke (16) an die zentrale Steuerung (14) übermittelt;
als Antwort auf Detektieren eines Sicherheitsereignisses durch eine entsprechende Sicherheitskamera (58), wenn sich die entsprechende Sicherheitskamera (58) im Modus mit niedriger Funktionalität befindet, die entsprechende Sicherheitskamera (58) dazu konfiguriert ist, die entsprechende Sicherheitskamera (58) in einen Modus mit höherer Funktionalität umzuschalten, wobei im Modus mit höherer Funktionalität die entsprechende Sicherheitskamera (58) einen Videostream höherer Qualität produziert, der dazu führt, dass die entsprechende Sicherheitskamera (58) mehr Strom verbraucht und/oder dass die entsprechende Sicherheitskamera (58) mehr Bandbreite verbraucht, wenn der Videostream höherer Qualität über das eine oder die mehrere Netzwerke (16) an die zentrale Steuerung (14) übermittelt wird, und die entsprechende Sicherheitskamera (58) dazu konfiguriert ist, dass sie über den drahtlosen Peer-to-Peer-Kommunikationsanschluss (18) eine Nachricht an eine oder mehrere benachbarte Sicherheitskameras (58) sendet, um die eine oder mehreren benachbarten Sicherheitskameras (58) von ihrem niedrigeren Funktionsmodus in ihren höheren Funktionsmodus umzuschalten.

## Revendications

1. Procédé de surveillance d'un état de santé de chacun d'une pluralité de services s'exécutant sur un dispositif de commande de bâtiment (12) d'un système de commande de bâtiment (10), dans lequel chacun de la pluralité de services correspond à un service initié par une application ou à un service initié par un système d'exploitation du dispositif de commande de bâtiment (12), et dans lequel l'état de santé de chacun de la pluralité de services est sélectionné parmi deux conditions d'état de santé prédéterminées ou plus incluant un état de santé normal et un état de santé suspendu, dans lequel l'état de santé suspendu indique que le service correspondant est actuellement indisponible et/ou bien ne répond pas, le procédé comprenant :
le suivi et le rapport individuel par le dispositif de commande de bâtiment (12) de l'état de santé de chacun de la pluralité de services s'exécutant sur le dispositif de commande de bâtiment (12) ; et
la transmission sans fil par le dispositif de commande de bâtiment (12) de l'état de santé d'au moins ces services s'exécutant sur le dispositif de commande de bâtiment (12) qui sont rapportés comme ayant l'état de santé suspendu, le cas échéant.

2. Procédé selon la revendication 1, dans lequel le système de commande de bâtiment (10) comprend un système de vidéosurveillance, et le dispositif de commande de bâtiment (12) comprend une caméra vidéo (58).

3. Procédé selon la revendication 1, dans lequel le système de commande de bâtiment (10) comprend un contrôleur central (14), et dans lequel le dispositif de commande de bâtiment (12) est couplé fonctionnellement au contrôleur central (14) via un premier réseau (16), le procédé comprenant en outre :
l'établissement d'une voie de communication poste-à-poste (18) entre le dispositif de commande de bâtiment (12) et un dispositif de commande de bâtiment (12) voisin du système de commande de bâtiment (10), dans lequel la voie de communication poste-à-poste (18) est séparée du premier réseau (16) ;
l'envoi par le dispositif de commande de bâtiment (12) de l'état de santé d'au moins ces services s'exécutant sur le dispositif de commande de bâtiment (12) qui sont déterminés comme ayant l'état de santé suspendu au dispositif de commande de bâtiment (12) voisin via la voie de communication poste-à-poste (18) ; et
en réponse à la réception à partir du dispositif de commande de bâtiment (12) de l'état de santé d'au moins ces services s'exécutant sur le dispositif de commande de bâtiment (12) qui sont déterminés comme ayant l'état de santé suspendu, le rapport par le dispositif de commande de bâtiment (12) voisin d'une alerte au contrôleur central (14) via le premier réseau (16) qui indique que l'au moins un service du dispositif de commande de bâtiment (12) a l'état de santé suspendu.

4. Procédé selon la revendication 3, dans lequel :
le premier réseau (16) est un réseau câblé ; et
la voie de communication poste-à-poste (18) est une voie de communication sans fil.

5. Procédé selon la revendication 1, dans lequel le système de commande de bâtiment (10) comprend un contrôleur central (14), et dans lequel le dispositif de commande de bâtiment (12) et un dispositif de commande de bâtiment (12) voisin du système de commande de bâtiment (10) sont couplés fonctionnellement au contrôleur central (14) via un premier réseau (16), le procédé comprenant en outre :
le dispositif de commande de bâtiment (12) configuré pour transmettre sans fil un message de santé au dispositif de commande de bâtiment (12) voisin via une voie de communication poste-à-poste (18) au cours d'une fenêtre temporelle prédéterminée ; et
le rapport d'une alerte par le dispositif de commande de bâtiment (12) voisin au contrôleur central (14) via le premier réseau (16) lorsque le dispositif de commande de bâtiment (12) ne réussit pas à transmettre sans fil le message de santé via la voie de communication poste-à-poste (18) au cours de la fenêtre temporelle prédéterminée.

6. Procédé selon la revendication 5, dans lequel le message de santé inclut l'état de santé d'au moins ces services s'exécutant sur le dispositif de commande de bâtiment (12) qui sont déterminés comme ayant l'état de santé suspendu, le cas échéant.

7. Procédé selon la revendication 2, dans lequel la pluralité de services comprend un ou plusieurs parmi :
un service d'analyse vidéo qui applique une ou plusieurs analyses vidéo à un flux vidéo capturé par la caméra vidéo (58) ;
un service de commande de caméra qui commande un panoramique, une inclinaison, un zoom, une mise au point et/ou un iris de la caméra vidéo (58) ;
un service de diffusion en continu qui commande la diffusion en continu d'un flux vidéo capturé par la caméra vidéo (58) ; et
un service de réseau qui commande une communication de réseau entre la caméra vidéo (58) et un ou plusieurs autres dispositifs du système de commande de bâtiment (10).

8. Procédé selon la revendication 1, dans lequel au moins certains de la pluralité de services sont initiés par un ou plusieurs programmes d'application s'exécutant sur le dispositif de commande de bâtiment (12), dans lequel les un ou plusieurs programmes d'application sont séparés d'un système d'exploitation du dispositif de commande de bâtiment (12) et sont supportés par celui-ci.

9. Procédé selon la revendication 1, dans lequel le système de commande de bâtiment (10) comprend :
un système de vidéosurveillance, et le dispositif de commande de bâtiment (12) comprend un parmi une caméra vidéo (58), un capteur d'intrusion et un dispositif de commande d'accès ; et/ou
un système de chauffage, ventilation et/ou climatisation (CVC), et le dispositif de commande de bâtiment (12) comprend un dispositif de CVC.

10. Procédé selon la revendication 1, dans lequel la détermination de l'état de santé de chacun de la pluralité de services s'exécutant sur le dispositif de commande de bâtiment (12) comprend :
la surveillance répétée et proactive de chacun de la pluralité de services s'exécutant sur le dispositif de commande de bâtiment (12) et le rapport individuel lorsqu'un de la pluralité de services correspondant est actuellement indisponible et/ou bien ne répond pas.

11. Procédé selon la revendication 1, dans lequel la transmission sans fil de l'état de santé d'au moins ces services s'exécutant sur le dispositif de commande de bâtiment (12) qui sont rapportés comme ayant l'état de santé suspendu, le cas échéant, comprend :
le rapport d'une défaillance via un réseau au contrôleur de bâtiment central (14) du système de commande de bâtiment (10).

12. Procédé selon la revendication 11, dans lequel en réponse au rapport de la défaillance, des mesures sont prises pour corriger les un ou plusieurs de la pluralité de services du dispositif de commande de bâtiment (12) qui sont actuellement indisponibles et/ou bien ne répondent pas, dans lequel les mesures prises incluent un ou plusieurs parmi :
la réinitialisation du dispositif de commande de bâtiment (12) ; et
le redémarrage des un ou plusieurs de la pluralité de services du dispositif de commande de bâtiment (12) qui sont actuellement indisponibles et/ou bien sans réponse.

13. Système de commande de bâtiment (10) comprenant :
une pluralité de dispositifs de commande de bâtiment (12) ;
un contrôleur de bâtiment central (14), dans lequel la pluralité de dispositifs de commande de bâtiment (12) sont couplés fonctionnellement au contrôleur de bâtiment central (14) via un ou plusieurs réseaux (16) ;
un premier de la pluralité de dispositifs de commande de bâtiment (12) établissant une voie de communication poste-à-poste sans fil (18) avec un deuxième de la pluralité de dispositifs de commande de bâtiment (12) voisin, dans lequel la voie de communication poste-à-poste sans fil (18) est séparée des un ou plusieurs réseaux (16) ;
le premier de la pluralité de dispositifs de commande de bâtiment (12) et/ou le deuxième de la pluralité de dispositifs de commande de bâtiment (12) surveillant individuellement de façon répétée et proactive chacun d'une pluralité de services s'exécutant sur le premier dispositif de commande de bâtiment (12) pour identifier quand un ou plusieurs de la pluralité de services s'exécutant sur le premier dispositif de commande de bâtiment (12) sont actuellement indisponibles et/ou bien ne répondent pas, dans lequel chacun de la pluralité de services correspond à un service initié par une application et/ou un service initié par un système d'exploitation s'exécutant sur le premier dispositif de commande de bâtiment (12) ; et
en réponse à l'identification qu'un ou plusieurs de la pluralité de services du premier de la pluralité de dispositifs de commande de bâtiment (12) est/sont actuellement indisponibles et/ou bien ne répondent pas, le deuxième de la pluralité de dispositifs de commande de bâtiment (12) rapportant une défaillance via les un ou plusieurs réseaux (16) au contrôleur de bâtiment central (14).

14. Système de commande de bâtiment selon la revendication 13, dans lequel la pluralité de dispositifs de commande de bâtiment (12) inclut une pluralité de capteurs, chacun destiné à détecter un événement de sécurité correspondant, et dans lequel :
en réponse à la détection d'un événement de sécurité via un premier de la pluralité de capteurs, l'envoi par le premier de la pluralité de capteurs d'un message du premier de la pluralité de capteurs à un premier de la pluralité de capteurs voisin via la voie de communication poste-à-poste sans fil (18) indiquant la détection de l'événement de sécurité par le premier de la pluralité de capteurs ;
en réponse à la réception du message par le premier de la pluralité de capteurs voisin, le premier de la pluralité de capteurs voisin détermine si le premier de la pluralité de capteurs voisin a également détecté l'événement de sécurité ; et
le premier de la pluralité de capteurs voisin est configuré pour rapporter l'événement de sécurité au contrôleur de bâtiment central (14) avec un score de confiance inférieur lorsque le premier de la pluralité de capteurs voisin n'a pas détecté l'événement de sécurité et est configuré pour rapporter l'événement de sécurité au contrôleur de bâtiment central (14) avec un score de confiance supérieur au score de confiance inférieur lorsque le premier de la pluralité de capteurs voisin a également détecté l'événement de sécurité.

15. Système de commande de bâtiment selon la revendication 13, dans lequel la pluralité de dispositifs de commande de bâtiment (12) inclut une pluralité de caméras de sécurité (58) incluant chacune un port d'E/S (66) pour communiquer un flux vidéo capturé par la caméra vidéo (58) correspondante à un contrôleur central (14) via un ou plusieurs réseaux (16), et un port de communication poste-à-poste sans fil (68) pour établir une communication poste-à-poste sans fil (18) avec une ou plusieurs caméras de sécurité (58) voisines, dans lequel :
chacune de la pluralité de caméras de sécurité (58) est configurée pour placer le contrôleur de caméra (70) correspondant dans un mode de fonctionnement inférieur, dans lequel dans le mode de fonctionnement inférieur, la caméra de sécurité (58) correspondante produit un flux vidéo de qualité inférieure qui amène la caméra de sécurité (58) correspondante à consommer moins de puissance et/ou amène la caméra de sécurité (58) correspondante à consommer moins de bande passante lors de la communication du flux vidéo de qualité inférieure au contrôleur central (14) via les un ou plusieurs réseaux (16) ;
en réponse à la détection d'une survenance d'un événement de sécurité par une caméra de sécurité (58) correspondante lorsque la caméra de sécurité (58) correspondante est dans le mode de fonctionnement inférieur, la caméra de sécurité (58) correspondante est configurée pour commuter la caméra de sécurité (58) correspondante vers un mode de fonctionnement supérieur, dans lequel dans le mode de fonctionnement supérieur, la caméra de sécurité (58) correspondante produit un flux vidéo de qualité supérieure qui amène la caméra de sécurité (58) correspondante à consommer plus de puissance et/ou amène la caméra de sécurité (58) correspondante à consommer plus de bande passante lors de la communication du flux vidéo de qualité supérieure au contrôleur central (14) via les un ou plusieurs réseaux (16), et la caméra de sécurité (58) correspondante est configurée pour envoyer un message à une ou plusieurs caméras de sécurité (58) voisines via le port de communication poste-à-poste sans fil (18) pour commuter les une ou plusieurs caméras de sécurité (58) voisines de leur mode de fonctionnement inférieur à leur mode de fonctionnement supérieur.
